# EUROPEAN PATENT APPLICATION

(11) **EP 4 301 049 A1**
(43) Date of publication of application: **03.01.2024**
(21) Application number: 21927178.0
(22) Date of filing: 24.02.2021
(51) Int. Cl.: H04W 48/16

(54) **NETWORK ACCESS METHOD, NETWORK ACCESS APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: dompatent von Kreisler Selting Werner - Partnerschaft von Patent- und Rechtsanwälten mbB
(86) International application number: PCT/CN2021/077747
(87) International publication number: WO 2022/178734

(57) **Abstract**

The present disclosure relates to a network access method, a network access apparatus, and a storage medium. The network access method is applied in a terminal, and the method comprises: determining a parameter of a terminal; and determining a corresponding signal threshold according to the parameter of the terminal. By means of the present disclosure, different candidate signal thresholds can be provided to different types of terminals and/or terminals having different coverage capabilities, so as to satisfy access needs for different types of terminals and/or terminals having different coverage capabilities, differences between terminal capabilities are better reflected, and coverage enhancement capabilities supported by terminals can be better harnessed.

## Description

### TECHNICAL FIELD

The present disclosure relates to a field of wireless communication technologies, and particularly to a method and an apparatus for accessing a network, and a storage medium.

### BACKGROUND

In a wireless communication system, a machine type communication (MTC) technology and a narrow band Internet of Things (NB-IoT) technology are provided in low-rate, high-latency and other scenarios of an Internet of Things (IoT) service. Due to development of the Internet of Things service, the MTC and NB-IoT technologies cannot satisfy requirements of a current IoT service for a rate and a latency. Therefore, a new reduced capability (Redcap) terminal, simply referred to as an NR-lite, is designed to cover service requirements of the IoT.

In the related art, the terminal detects a L1-reference signal receiving power (RSRP) parameter based on a synchronization signal and PBCH (Physical Broadcast Channel) block (SSB). When the terminal randomly accesses a cell or is required to perform beam recovery in case of beam failure, the terminal is required to compare the detected L1-RSRP parameter with a RSRP threshold parameter of an SSB signal configured by a system. When the L 1-RSRP parameter is higher than the RSRP threshold parameter of the SSB signal, the terminal is allowed to use a beam of the SSB as a candidate beam, and/or the terminal is allowed to access the cell based on a random access resource corresponding to the beam of the SSB. However, terminals have different capabilities and/or different coverage enhancement capabilities. Therefore, all terminals share one set of same RSRP threshold parameter of the SSB signal, which may not reflect differences between terminal capabilities better, and may not exert coverage enhancement capabilities of the terminals better.

### SUMMARY

To overcome problems existing in the related art, a method and an apparatus for accessing a network, and a storage medium are provided in the present disclosure.

According to a first aspect of embodiments of the present disclosure, there is provided a method for accessing a network, performed by a terminal. The method includes:
determining a terminal parameter; and determining a corresponding signal threshold value based on the terminal parameter.

In an implementation, the method further includes:
determining a measured value of a measurement signal of the terminal; and determining that accessing is performed based on a resource corresponding to the terminal parameter in response to the measured value being greater than or equal to the signal threshold value.

In an implementation, the terminal parameter includes at least one of:
a terminal type; or
a terminal coverage enhancement capability.

In an implementation, determining the corresponding signal threshold value based on the terminal parameter includes:
determining at least one candidate signal threshold value, in which each of the at least one candidate signal threshold value corresponds to a different terminal parameter; and determining the corresponding signal threshold value from the at least one candidate signal threshold value based on the terminal parameter.

In an implementation, determining the corresponding signal threshold value from the at least one candidate signal threshold value based on the terminal parameter includes:
determining the corresponding signal threshold value from the at least one candidate signal threshold value based on a correspondence between each candidate signal threshold value and a terminal type;
   and/or
determining the corresponding signal threshold value from the at least one candidate signal threshold value based on a correspondence between each candidate signal threshold value and a terminal coverage enhancement function.

In an implementation, determining the corresponding signal threshold value based on the terminal parameter includes:
determining a first signal threshold value and at least one candidate signal threshold bias value; and determining the corresponding signal threshold value based on the terminal parameter, the first signal threshold value and the at least one candidate signal threshold bias value.

In an implementation, determining the corresponding signal threshold value based on the terminal parameter, the first signal threshold value and the at least one candidate signal threshold bias value includes:
determining a corresponding signal threshold bias value from the at least one candidate signal threshold bias value based on the terminal parameter; and determining an operation value of the first signal threshold value and the corresponding signal threshold bias value as the corresponding signal threshold value.

In an implementation, determining the corresponding signal threshold value based on the terminal parameter, the first signal threshold value and the at least one candidate signal threshold bias value includes:
determining at least one candidate signal threshold value based on an operation value of the first signal threshold value and each of the at least one candidate signal threshold bias value; and determining the corresponding signal threshold value from the at least one candidate signal threshold value based on the terminal parameter.

In an implementation, the at least one candidate signal threshold bias value is determined based on the terminal type and/or the terminal coverage enhancement function.

In an implementation, the method further includes:
receiving remaining minimum system information (RMSI), in which the RMSI is configured to carry at least one candidate signal threshold value and/or at least one candidate signal threshold bias value.

In an implementation, the signal is a reference signal receiving power (RSRP).

According to a second aspect of embodiments of the present disclosure, there is provided a method for accessing a network, performed by a network side device. The method includes:
determining at least one candidate signal threshold value, in which the at least one at least one candidate signal threshold value is associated with a terminal parameter.

In an implementation, the terminal parameter includes at least one of:
a terminal type; or
a terminal coverage enhancement capability.

In an implementation, determining the at least one candidate signal threshold value includes:
determining the at least one candidate signal threshold value based on the terminal type and/or the terminal coverage enhancement capability, in which each of the at least one candidate signal threshold value corresponds to a different terminal parameter.

In an implementation, determining the at least one candidate signal threshold value includes:
determining a first signal threshold value and at least one candidate signal threshold bias value; and determining the at least one candidate signal threshold value based on an operation value of the first signal threshold value and each of the at least one candidate signal threshold bias value.

In an implementation, the at least one candidate signal threshold bias value is determined based on a terminal type and/or a terminal coverage enhancement function.

In an implementation, the method further includes:
sending remaining minimum system information (RMSI), in which the RMSI is configured to carry the at least one candidate signal threshold value and/or at least one candidate signal threshold bias value.

In an implementation, the signal is a reference signal receiving power (RSRP).

According to a third aspect of embodiments of the present disclosure, there is provided an apparatus for accessing a network, applicable for a terminal. The apparatus includes:
a parameter module, configured to determine a terminal parameter; and a determining module, configured to determine a corresponding signal threshold value based on the terminal parameter.

In an implementation, the determining module is further configured to:
determine a measured value of a measurement signal of the terminal; and determine that accessing is performed based on a resource corresponding to the terminal parameter in response to the measured value being greater than or equal to the signal threshold value.

In an implementation, the terminal parameter includes at least one of:
a terminal type; or
a terminal coverage enhancement capability.

In an implementation, the determining module is configured to:
determine at least one candidate signal threshold value, in which each of the at least one candidate signal threshold value corresponds to a different terminal parameter; and determine the corresponding signal threshold value from the at least one candidate signal threshold value based on the terminal parameter.

In an implementation, the determining module is configured to:
determine the corresponding signal threshold value from the at least one candidate signal threshold value based on a correspondence between each candidate signal threshold value and a terminal type;
   and/or
determine the corresponding signal threshold value in the corresponding signal threshold value from the at least one candidate signal threshold value based on a correspondence between each candidate signal threshold value and a terminal coverage enhancement function.

In an implementation, the determining module is configured to:
determine a first signal threshold value and at least one candidate signal threshold bias value; and determine the corresponding signal threshold value based on the terminal parameter, the first signal threshold value and the at least one candidate signal threshold bias value.

In an implementation, the determining module is configured to:
determine a corresponding signal threshold bias value from the at least one candidate signal threshold bias value based on the terminal parameter; and determine an operation value of the first signal threshold value and the corresponding signal threshold bias value as the corresponding signal threshold value.

In an implementation, the determining module is configured to:
determine at least one candidate signal threshold value based on an operation value of the first signal threshold value and each of the at least one candidate signal threshold bias value; and determine the corresponding signal threshold value from the at least one candidate signal threshold value based on the terminal parameter.

In an implementation, the at least one candidate signal threshold bias value is determined based on a terminal type and/or a terminal coverage enhancement function.

In an implementation, the apparatus further includes a receiving module;
the receiving module is configured to receive remaining minimum system information (RMSI), in which the RMSI is configured to carry at least one candidate signal threshold value and/or at least one candidate signal threshold bias value.

In an implementation, the signal is a reference signal receiving power (RSRP).

According to a fourth aspect of embodiments of the present disclosure, there is provided an apparatus for accessing a network is provided, applicable for a network side device. The apparatus includes:
a determining module, configured to determine at least one candidate signal threshold value, in which the at least one at least one candidate signal threshold value is associated with a terminal parameter.

In an implementation, the terminal parameter includes at least one of:
a terminal type; or
a terminal coverage enhancement capability.

In an implementation, the determining module is configured to:
determine the at least one candidate signal threshold value based on the terminal type and/or the terminal coverage enhancement capability, in which each candidate signal threshold value corresponds to a different terminal parameter.

In an implementation, the determining module is configured to:
determine a first signal threshold value and at least one candidate signal threshold bias value; and determine the at least one candidate signal threshold value based on an operation value of the first signal threshold value and each of the at least one candidate signal threshold bias value.

In an implementation, the at least one candidate signal threshold bias value is determined based on a terminal type and/or a terminal coverage enhancement function.

In an implementation, the apparatus further includes a sending module;
the sending module is configured to send remaining minimum system information (RMSI), in which the RMSI is configured to carry the at least one candidate signal threshold value and/or at least one candidate signal threshold bias value.

In an implementation, the signal is a reference signal receiving power (RSRP).

According to a fifth aspect of embodiments of the present disclosure, there is provided a device for accessing a network. The device includes:
a processor; and a memory configured for storing instructions executable by the processor; in which, the processor is configured to perform the method for accessing the network in the first aspect or any one implementation of the first aspect or perform the method for accessing the network in the second aspect or any one implementation of the second aspect.

According to a sixth aspect of embodiments of the present disclosure, a non-transitory computer-readable storage medium is provided. When instructions in the storage medium are executed by a processor of a mobile terminal, the mobile terminal is caused to perform the method for accessing a network as described in the first aspect or any one implementation of the first aspect, or configured to perform the method for accessing a network as described in the second aspect or any one implementation of the second aspect.

The technical solution according to embodiments of the present disclosure may include the following beneficial effect. The terminal determines the corresponding signal threshold value based on the terminal parameter. Different types of terminals and/or terminals having different coverage capabilities may correspond to different candidate signal threshold values, so that access requirements for the different types of terminals and/or the terminals having different coverage capabilities are satisfied. Differences between terminal capabilities are better reflected, and coverage enhancement capabilities supported by the terminals may be better exerted.

It should be noted that, the details above and in the following are exemplary and illustrative, and do not constitute the limitation on the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a schematic diagram illustrating an architecture of a communication system between a network device and a terminal according to an exemplary embodiment.
FIG. 2 is a flowchart illustrating a method for accessing a network according to an exemplary embodiment.
FIG. 3 is a flowchart illustrating another method for accessing a network according to an exemplary embodiment.
FIG. 4 is a flowchart illustrating another method for accessing a network according to an exemplary embodiment.
FIG. 5 is a flowchart illustrating another method for accessing a network according to an exemplary embodiment.
FIG. 6 is a flowchart illustrating another method for accessing a network according to an exemplary embodiment.
FIG. 7 is a schematic diagram illustrating a correspondence between a terminal parameter including a terminal type and a terminal coverage enhancement function and a candidate signal threshold value according to an exemplary embodiment.
FIG. 8 is a flowchart illustrating another method for accessing a network according to an exemplary embodiment.
FIG. 9 is a flowchart illustrating another method for accessing a network according to an exemplary embodiment.
FIG. 10 is a flowchart illustrating another method for accessing a network according to an exemplary embodiment.
FIG. 11 is a flowchart illustrating another method for accessing a network according to an exemplary embodiment.
FIG. 12 is a flowchart illustrating another method for accessing a network according to an exemplary embodiment.
FIG. 13 is a flowchart illustrating another method for accessing a network according to an exemplary embodiment.
FIG. 14 is a flowchart illustrating another method for accessing a network according to an exemplary embodiment.
FIG. 15 is a flowchart illustrating another method for accessing a network according to an exemplary embodiment.
FIG. 16 is a flowchart illustrating another method for accessing a network according to an exemplary embodiment.
FIG. 17 is a flowchart illustrating another method for accessing a network according to an exemplary embodiment.
FIG. 18 is a flowchart illustrating another method for accessing a network according to an exemplary embodiment.
FIG. 19 is a flowchart illustrating another method for accessing a network according to an exemplary embodiment.
FIG. 20 is a block diagram illustrating an apparatus for accessing a network according to an exemplary embodiment.
FIG. 21 is a block diagram illustrating another apparatus for accessing a network according to an exemplary embodiment.
FIG. 22 is a block diagram illustrating a device for accessing a network according to an exemplary embodiment.
FIG. 23 is a block diagram illustrating another device for accessing a network according to an exemplary embodiment.

### DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

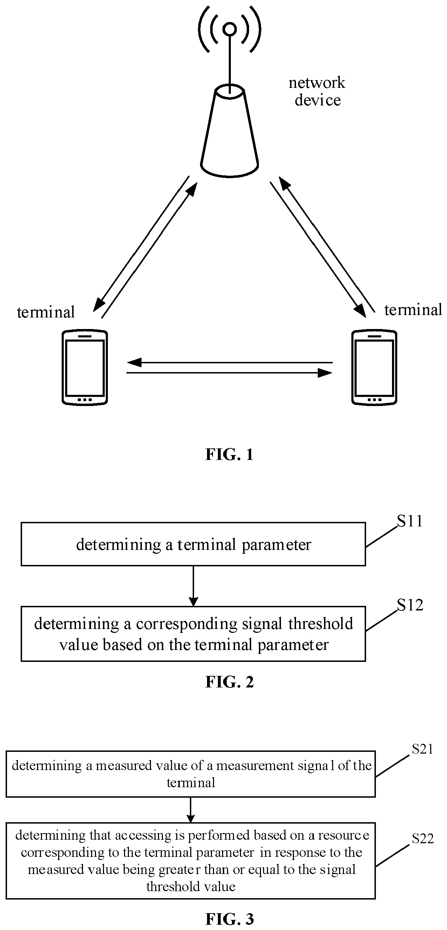

FIG. 1 is a schematic diagram illustrating an architecture of a communication system between a network device and a terminal according to an exemplary embodiment. A communication method in embodiments of the present disclosure is applicable for an architecture diagram of a communication system as illustrated in FIG. 1. As illustrated in FIG. 1, a network side device may send a signaling based on the architecture as illustrated in FIG. 1.

It may be understood that, the communication system between the network system and the terminal as illustrated in FIG. 1 are only illustrative, and the wireless communication system further may include other network devices, and for example, further may include a core network device, a wireless relay device and a wireless backhaul device not shown in FIG. 1. A number of network devices and a number of terminals included in the wireless communication system are not limited in embodiments of the present disclosure.

It may be further understood that, the wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. Networks may be classified as a 2G (generation) network, a 3G network, a 4G network or a future evolution network based on capacities, rates, latencies and other factors of different networks. For example, the 5G network may also be referred to as a new radio (NR) network. For ease of description, a wireless communication network is simply referred to as a network in the disclosure sometimes.

Further, the network device involved in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (WiFi) system, or a gNB in an NR system, or may also be a component or a part of devices for constituting a base station. The network device further may be a vehicle-mounted device in an Internet of Vehicles (V2X) communication system. It should be understood that, a specific technology and a specific device form adopted by the network device are not limited in the embodiments of the present disclosure.

Further, the terminal involved in the present disclosure, also referred to as a terminal device, a user equipment (UE), a mobile station (MS), a mobile terminal (MT), etc., may be a device that provides voice and/or data connectivity to a user. For example, the terminal may be a handheld device with a wireless connection function or a vehicle-mounted device, etc. At present, some terminals include, for example, a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in an Internet of Vehicles (V2X) communication system. It should be understood that, a specific technology and a specific device form adopted by the terminal are not limited in the embodiments of the present disclosure.

For a Reduced capability UE in a long term evolution (LTE) 4G system and other communication systems, in order to support an Internet of Things service, two technologies including a machine type communication (MTC) technology and a narrow band Internet of Things (NB-IoT) technology are provided. The two technologies are mainly for low-rate, high-latency and other scenarios, such as, a meter reading scenario and an environment monitoring scenario, etc. The NB-IoT technology may support a maximum transmission rate of several hundred kbps, and the MTC technology may support a maximum transmission rate of several Mbps. However, with continuous development of Internet of Things services, such as video surveillance, smart home, wearable devices, industrial sensing monitoring and other services, the services usually require a transmission rate of dozens to 100 Mbps, and also have a relatively high requirement on a latency for the above services. Therefore, the MTC technology and the NB-IoT technology are difficult to satisfy the requirements of the above services. Based on this, it is proposed to redesign a new user equipment (UE) in the 5G NR, to cover a requirement of a midrange Internet of Things device. In a current 3rd Generation Partnership Project (3GPP) standardization, the new terminal type is referred to as a Reduced capability (Redcap) terminal or referred to as an NR-lite (lite New Radio). The Redcap terminal satisfies requirements of low cost and low complexity, and the Redcap terminal may limit a radio frequency (RF) bandwidth part to 5M Hz or 10M Hz, or limit a size of a buffer of the NR-Lite, and further limit a size of a transmission block received each time. Effects such as saving a power, simplifying a communication process, and reducing a number of times of an NR-lite user detecting a downlink control channel are achieved.

In the related art, the terminal detects an L1-RSRP based on an SSB. When the terminal randomly accesses a cell or is required to perform beam recovery in case of beam failure, the terminal is required to compare the detected L1-RSRP parameter with a RSRP threshold parameter of an SSB signal configured by a system. When the L1-RSRP parameter is higher than the RSRP threshold value parameter of the SSB signal, the terminal is allowed to use a beam of the SSB as a candidate beam, and/or the terminal is allowed to access a cell based on a random access resource corresponding to the beam of the SSB.

In the related art, on one hand, a coverage enhancement function is further introduced, and a coverage range of a terminal supporting the coverage enhancement function is relatively larger than a coverage range of a terminal not supporting the coverage enhancement function. On the other hand, a Redcap terminal is further introduced, and some terminals in the Redcap terminals have a 3dB loss in an antenna radiation efficiency due to a limitation of morphology.

Therefore, in a communication protocol in the related art, all terminals share one set of RSRP threshold value parameters of the SSB signal. However, converges that may be satisfied by different terminal capabilities are different (for example, capabilities of the Redcap terminal and a normal terminal are different). Therefore, all terminals share one set of same RSRP threshold value parameters of the SSB, which may not reflect differences between terminal capabilities better, but also may not exert coverage enhancement capabilities of the terminals better.

Based on the above technical problem, a method for accessing a network is provided in the present disclosure. A plurality of sets of RSRP threshold value parameters of the SSB signal are configured, and the plurality of sets of RSRP threshold value parameters of the SSB signal may respectively correspond to terminals with different types and/or terminals that support the coverage enhancement function.

FIG. 2 is a flowchart illustrating a method for accessing a network according to an exemplary embodiment. As illustrated in FIG. 2, the method for accessing the network is performed by a terminal, and includes the following steps.

At step S11, a terminal parameter is determined.

At step S12, a corresponding signal threshold value is determined based on the terminal parameter.

In embodiments of the present disclosure, in a process of a network accessing a cell, the terminal determines its parameter itself, and determines the corresponding signal threshold value for accessing the cell based on its own parameter. The terminal may determine a candidate signal threshold value based on a system message. The corresponding signal threshold value is determined from the candidate signal threshold value.

In an exemplary embodiment of the present disclosure, one terminal may correspond to one or more signal threshold values. In an exemplary embodiment of the present disclosure, two terminals with different parameters may correspond to a same signal threshold value. In an exemplary embodiment of the present disclosure, the terminals with different parameters correspond to completely different signal threshold values, or the terminals with different parameters correspond to not completely same signal threshold values.

In an exemplary embodiment of the present disclosure, the candidate signal threshold value may be one or more candidate signal threshold values, and each candidate signal threshold value corresponds to a different terminal parameter.

In the method for accessing the network in the present disclosure, with determining the corresponding candidate signal threshold value corresponding to the terminal parameter, different candidate signal threshold values may be provided for terminals with different types and/or terminals having different coverage capabilities, so that access requirements for the terminals with different types and/or the terminals having different coverage capabilities are satisfied, differences between terminal capabilities are better reflected, and coverage enhancement capabilities supported by the terminals may be better exerted.

FIG. 3 is a flowchart illustrating a method for accessing a network according to an exemplary embodiment. As illustrated in FIG. 3, the method for accessing the network is performed by a terminal, and includes the following steps.

At step S21, a measured value of a measurement signal of the terminal is determined.

At step S22, it is determined that accessing is performed based on a resource corresponding to the terminal parameter in response to the measured value being greater than or equal to the signal threshold value.

In embodiments of the present disclosure, the terminal compares the measured value of the measurement signal with the signal threshold value determined. In response to the measured value being greater than or equal to the signal threshold value, the terminal determines that a cell can be accessed, and further determines to access the cell by using the access resource corresponding to the terminal parameter. In response to the measured value being less than or equal to the signal threshold value, the terminal determines that the cell is not allowed to be accessed.

In an exemplary embodiment of the present disclosure, the terminal parameter includes at least one of:
a terminal type; or
a terminal coverage enhancement capability.

The terminal type may include a first-type terminal and a second-type terminal. For example, the first-type terminal may be a normal terminal, and the second-type terminal may be a Redcap terminal. The terminal type may further include other types of terminals, which is not limited in embodiments of the present disclosure.

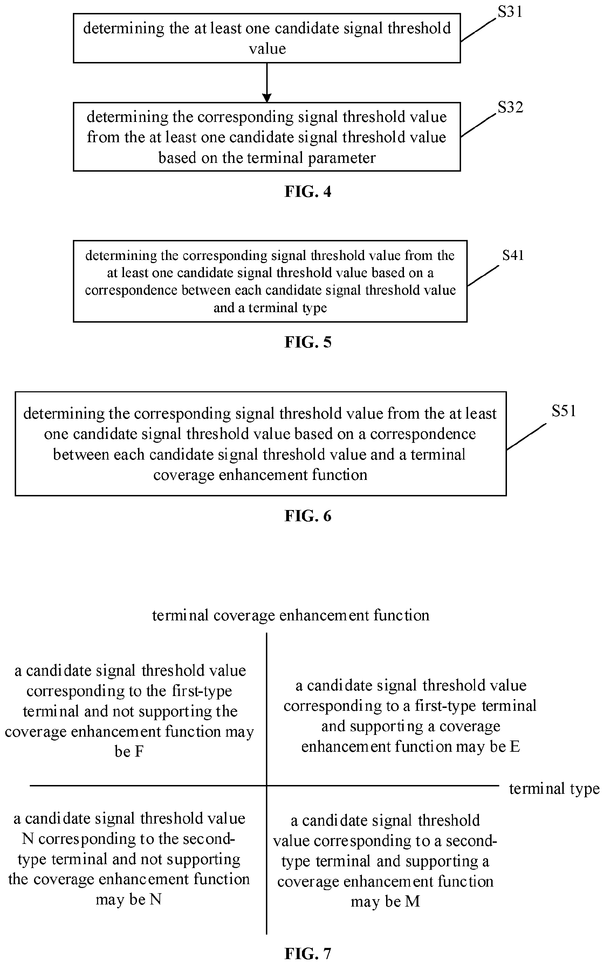

FIG. 4 is a flowchart illustrating a method for accessing a network according to an exemplary embodiment. As illustrated in FIG. 4, the method for accessing the network is performed by a terminal. The method may be executed independently, and may be executed in combination with other embodiments of the present disclosure, or may be executed in combination with the related art. The method may include the following steps.

At step S31, the at least one candidate signal threshold value is determined.

In embodiments of the present disclosure, each of the at least one candidate signal threshold value corresponds to a different terminal parameter. The at least one candidate signal threshold value may be determined through a candidate signal threshold value set. Alternatively, the at least one candidate signal threshold value may be further determined via different signalings.

At step S32, the corresponding signal threshold value is determined from the at least one candidate signal threshold value based on the terminal parameter.

In embodiments of the present disclosure, the terminal determines the corresponding signal threshold value from the at least one candidate signal threshold value based on the type and/or the coverage enhancement function of the terminal itself, and a correspondence between each candidate signal threshold value and the terminal type and/or the terminal coverage enhancement function.

FIG. 5 is a flowchart illustrating a method for accessing a network according to an exemplary embodiment. As illustrated in FIG. 5, the method for accessing the network is performed by a terminal. The method may be executed independently, and may be executed in combination with other embodiments of the present disclosure, or may be executed in combination with the related art. The method may include the following step.

At step S41, the corresponding signal threshold value is determined from the at least one candidate signal threshold value based on a correspondence between each of the at least one candidate signal threshold value and the type of the terminal.

In embodiments of the present disclosure, it is determined that the terminal determines the corresponding signal threshold value from the at least one candidate signal threshold value based on the type of the terminal and a correspondence between each candidate signal threshold value and the terminal type.

For example, the at least one candidate signal threshold value may include a candidate signal threshold value A, a candidate signal threshold value B, etc., and the terminal type includes a first-type terminal (for example, a normal terminal) and a second-type terminal (for example, a Redcap terminal). The correspondence between each candidate signal threshold value and the terminal type is that the candidate signal threshold value A corresponds to the first-type terminal, and the candidate signal threshold value B corresponds to the second-type terminal. In an implementation, the candidate signal threshold value A is determined from the at least one candidate signal threshold value based on the terminal type being the first-type terminal. In an implementation, the candidate signal threshold value B is determined from the at the at least one candidate signal threshold value in response to the terminal type being the second-type terminal. It is only illustrative, and is not limited in the present disclosure.

FIG. 6 is a flowchart illustrating a method for accessing a network according to an exemplary embodiment. As illustrated in FIG. 6, the method for accessing the network is performed by a terminal. The method may be executed independently, and may be executed in combination with other embodiments of the present disclosure, or may be executed in combination with the related art. The method may include the following step.

At step S51, the corresponding signal threshold value is determined from the at least one candidate signal threshold value based on a correspondence between each candidate signal threshold value and a terminal coverage enhancement function.

In embodiments of the present disclosure, in response to the terminal parameter being the terminal coverage enhancement function, it is determined that the terminal determines the corresponding signal threshold value from the at least one candidate signal threshold value based on the coverage enhancement function of the terminal itself and the correspondence between each candidate signal threshold value and the terminal coverage enhancement function.

For example, the at least one candidate signal threshold value may include a candidate signal threshold value C, a candidate signal threshold value D, etc. The correspondence between each candidate signal threshold value and the terminal coverage enhancement function is that the candidate signal threshold value C corresponds to the terminal supporting the coverage enhancement function, and the candidate signal threshold value D corresponds to the terminal not supporting the coverage enhancement function. In an implementation, the candidate signal threshold value C is determined from the at the at least one candidate signal threshold value in response to the terminal coverage enhancement function being supporting the coverage enhancement function. In an implementation, the candidate signal threshold value D is determined from the at the at least one candidate signal threshold value in response to the terminal coverage enhancement function being not supporting the coverage enhancement function. It is only illustrative, and is not limited in the present disclosure.

In an exemplary embodiment of the present disclosure, FIG. 7 is a schematic diagram illustrating a correspondence between a terminal parameter including a terminal type and a terminal coverage enhancement function and a candidate signal threshold value according to an exemplary embodiment. As illustrated in FIG. 7, the at least one candidate signal threshold value is determined, and the correspondence between each candidate signal threshold value and the terminal type and/or the terminal coverage enhancement function is determined. For example, the terminal parameter with a first-type terminal and supporting a coverage enhancement function corresponds to a candidate signal threshold value E, the terminal parameter with the first-type terminal and not supporting the coverage enhancement function corresponds to a candidate signal threshold value F , the terminal parameter with a second-type terminal and supporting a coverage enhancement function corresponds to a candidate signal threshold value M, and the terminal parameter with the second-type terminal and not supporting the coverage enhancement function corresponds to a candidate signal threshold value N.

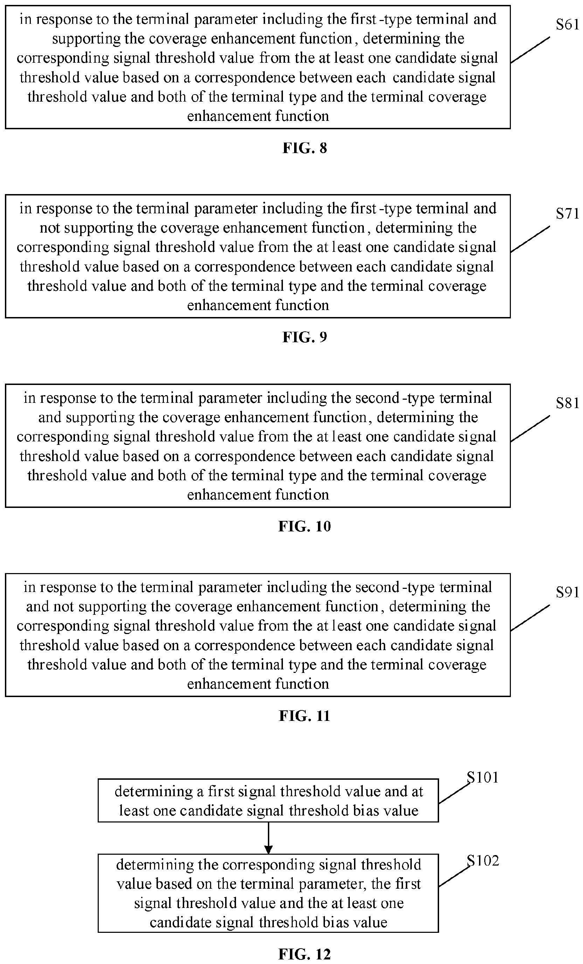

FIG. 8 is a flowchart illustrating a method for accessing a network according to an exemplary embodiment. As illustrated in FIG. 8, at step S61, in response to the terminal parameter including the first-type terminal and supporting the coverage enhancement function, the corresponding signal threshold value is determined from the at least one candidate signal threshold value based on a correspondence between each candidate signal threshold value and both of the terminal type and the terminal coverage enhancement function. The corresponding signal threshold value may be E based on the correspondence in the above embodiment.

FIG. 9 is a flowchart illustrating a method for accessing a network according to an exemplary embodiment. As illustrated in FIG. 9, at step S71, in response to the terminal parameter including the first-type terminal and not supporting the coverage enhancement function, the corresponding signal threshold value is determined from the at least one candidate signal threshold value based on a correspondence between each candidate signal threshold value and both of the terminal type and the terminal coverage enhancement function. The corresponding signal threshold value may be F based on the correspondence in the above embodiment.

FIG. 10 is a flowchart illustrating a method for accessing a network according to an exemplary embodiment. As illustrated in FIG. 10, at step S81, in response to the terminal parameter including the second-type terminal and supporting the coverage enhancement function, the corresponding signal threshold value is determined from the at least one candidate signal threshold value based on a correspondence between each candidate signal threshold value and both of the terminal type and the terminal coverage enhancement function. The corresponding signal threshold value may be M based on the correspondence in the above embodiment.

FIG. 11 is a flowchart illustrating a method for accessing a network according to an exemplary embodiment. As illustrated in FIG. 11, at step S91, in response to the terminal parameter including the second-type terminal and not supporting the coverage enhancement function, the corresponding signal threshold value is determined from the at least one candidate signal threshold value based on a correspondence between each candidate signal threshold value and both of the terminal type and the terminal coverage enhancement function. The candidate signal threshold value may be N based on the correspondence in the above embodiment.

The above embodiments are only illustrative, and are not limited in the present disclosure.

In some embodiments of the present disclosure, values of the candidate signal threshold values in the at least one candidate signal threshold value are discrete.

FIG. 12 is a flowchart illustrating a method for accessing a network according to an exemplary embodiment. As illustrated in FIG. 12, the method for accessing the network is performed by a terminal. The method may be executed independently, and may be executed in combination with other embodiments of the present disclosure, or may be executed in combination with the related art. The method may include the following steps.

At step S101, a first signal threshold value and at least one candidate signal threshold bias value are determined.

At step S102, the corresponding signal threshold value is determined based on the terminal parameter, the first signal threshold value and the at least one candidate signal threshold bias value.

In embodiments of the present disclosure, the first signal threshold value is a common signal threshold value, and the common signal threshold value is referred to as the first signal threshold value for convenience of distinguishing. The terminal determines the corresponding signal threshold bias value based on the type of the terminal itself and the coverage enhancement function of the terminal itself, and determines the corresponding signal threshold value based on the signal threshold bias value and the determined first signal threshold value.

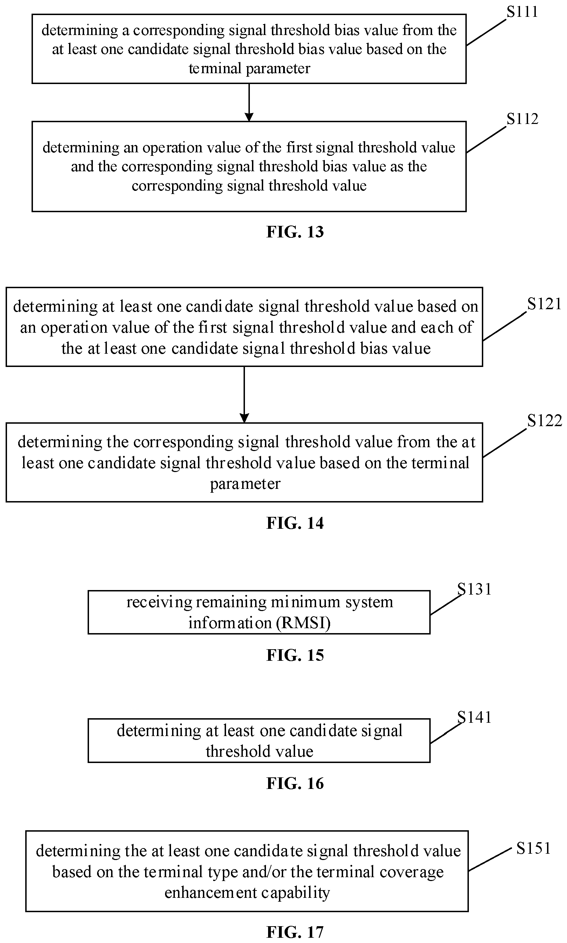

In an exemplary embodiment of the present disclosure, FIG. 13 is a flowchart illustrating a method for accessing a network according to an exemplary embodiment. As illustrated in FIG. 13, the method for accessing the network is performed by a terminal. The method may be executed independently, and may be executed in combination with other embodiments of the present disclosure, or may be executed in combination with the related art. The method may include the following steps.

At step S111, a corresponding signal threshold bias value is determined from the at least one candidate signal threshold bias value based on the terminal parameter.

In embodiments of the present disclosure, the terminal determines the corresponding signal threshold bias value from the at the at least one candidate signal threshold bias value based on the type and/or the coverage enhancement function of the terminal itself.

For example, a signal threshold bias value corresponding to a first-type terminal is determined in response to the terminal parameter including the first-type terminal. A signal threshold bias value corresponding to a second-type terminal is determined in response to the terminal parameter including the second-type terminal. A signal threshold bias value corresponding to supporting the coverage enhancement function is determined in response to the terminal parameter including supporting the coverage enhancement function. A signal threshold bias value corresponding to not supporting the coverage enhancement function is determined in response to the terminal parameter including not supporting the coverage enhancement function.

Alternatively, a signal threshold bias value corresponding to the first-type terminal and supporting the coverage enhancement function is determined in response to the terminal parameter including the first-type terminal and supporting the coverage enhancement function. A signal threshold bias value corresponding to the first-type terminal and not supporting the coverage enhancement function is determined in response to the terminal parameter including the first-type terminal and not supporting the coverage enhancement function. A signal threshold bias value corresponding to the second-type terminal and supporting the coverage enhancement function is determined in response to the terminal parameter including the second-type terminal and supporting the coverage enhancement function. A signal threshold bias value corresponding to the second-type terminal and not supporting the coverage enhancement function is determined in response to the terminal parameter including the second-type terminal and not supporting the coverage enhancement function.

At step S112, an operation value of the first signal threshold value and the corresponding signal threshold bias value is determined as the corresponding signal threshold value.

In embodiments of the present disclosure, the operation value of the signal threshold bias value determined and the first signal threshold value is determined as the signal threshold value corresponding to the terminal type and/or the terminal coverage enhancement function, and the signal threshold value is finally compared with a measured value of a measurement signal of the terminal.

In an exemplary embodiment of the present disclosure, FIG. 14 is a flowchart illustrating a method for accessing a network according to an exemplary embodiment. As illustrated in FIG. 14, the method for accessing the network is performed by a terminal, and may be executed independently, and may be executed in combination with other embodiments of the present disclosure, or may be executed in combination with the related art. The method may include the following steps.

At step S121, at least one candidate signal threshold value is determined based on the first signal threshold value and each of the at least one candidate signal threshold bias value.

At step S122, the corresponding signal threshold value is determined from the at least one candidate signal threshold value based on the terminal parameter.

In embodiments of the present disclosure, the terminal may determine the operation value of the first signal threshold value and each of the at least one candidate signal threshold value, and further determine the at least one candidate signal threshold value. The terminal determines the corresponding signal threshold bias value from the at least one candidate signal threshold value based on the type and the coverage enhancement function of the terminal itself, and determines the signal threshold value corresponding to the signal threshold bias value as a final signal threshold value for comparing with the measured value of the terminal.

In some embodiments of the present disclosure, the at least one candidate signal threshold bias value is determined based on the terminal type and/or the terminal coverage enhancement function.

In embodiments of the present disclosure, the at least one candidate signal threshold bias value is determined based on the terminal type and/or the terminal coverage enhancement function, and the first signal threshold value may be determined as a signal threshold value corresponding one of the terminal parameters, and other terminal parameters different from the parameter may be configured with a different signal threshold bias value. For example, a first number of candidate signal threshold bias values are determined in response to determining the signal threshold bias value based on the terminal type or the terminal coverage enhancement function. The first number may be one. For example, a second number of candidate signal threshold bias values are determined in response to determining the signal threshold bias value based on the terminal type and the terminal coverage enhancement function. The second number may be three.

In an exemplary embodiment of the present disclosure, the first signal threshold value may be determined as a common signal threshold value, and the corresponding signal threshold bias value is determined for each terminal parameter. For example, a third number of candidate signal threshold bias values are determined in response to determining the signal threshold bias value based on the terminal type or the terminal coverage enhancement function. The third number may be two. A fourth number of candidate signal threshold bias values are determined in response to determining the signal threshold bias value based on the terminal type and the terminal coverage enhancement function. The fourth number may be four.

In some embodiments of the present disclosure, the first signal threshold value is determined based on a communication protocol or a preconfigured rule.

FIG. 15 is a flowchart illustrating a method for accessing a network according to an exemplary embodiment. As illustrated in FIG. 15, the method for accessing the network is performed by a terminal. The method may include the following step.

At step S131, remaining minimum system information (RMSI) is received.

In embodiments of the present disclosure, the RMSI is configured to carry the at least one candidate signal threshold value and/or at least one candidate signal threshold bias value.

In embodiments of the present disclosure, the signal may be a reference signal received power (RSRP).

Based on the same/similar concept, a method for accessing a network is further provided in the disclosure.

FIG. 16 is a flowchart illustrating a method for accessing a network according to an exemplary embodiment. As illustrated in FIG. 1 6, the method for accessing the network is performed by a network side device, and includes the following steps.

At step S141, the at least one candidate signal threshold value is determined.

In embodiments of the present discourse, the network side device determines the at least one candidate signal threshold value. The at least one candidate signal threshold value is associated with a terminal parameter. Each candidate signal threshold value corresponds to a different terminal parameter.

In the method for accessing the network in the present disclosure, with determining the corresponding candidate signal threshold value corresponding to the terminal parameter, different candidate signal threshold values may be provided for terminals with different types and/or terminals having different coverage capabilities, so that access requirements for the terminals with different types and/or the terminals having different coverage capabilities are satisfied, differences between terminal capabilities are better reflected, and coverage enhancement capabilities supported by the terminals may be better exerted.

In an exemplary embodiment of the present disclosure, the at least one candidate signal threshold value determined by the network side device may be that one terminal may correspond to one or more signal threshold values. In an exemplary embodiment of the present disclosure, two terminals with different parameters may correspond to a same signal threshold value. In an exemplary embodiment of the present disclosure, the terminals with different parameters correspond to completely different signal threshold values, or the terminals with different parameters correspond to not completely same signal threshold values.

In embodiments of the present disclosure, the measured value of the measurement signal is compared with a determined signal threshold value, and it is determined that a cell may be accessed in response to the measured value being greater than or equal to the signal threshold value. It is determined that the cell is not allowed to be accessed in response to the measured value being less than or equal to the signal threshold value.

In an exemplary embodiment of the present disclosure, the terminal parameter includes at least one of:
a terminal type; or
a terminal coverage enhancement capability.

The terminal type may include a first-type terminal and a second-type terminal. For example, the first-type terminal may be a normal terminal, and the second-type terminal may be a Redcap terminal. The terminal type may further include other types of terminals, which is not limited in embodiments of the present disclosure.

FIG. 17 is a flowchart illustrating a method for accessing a network according to an exemplary embodiment. As illustrated in FIG. 17, the method for accessing the network is performed by a network side device. The method may be executed independently, and may be executed in combination with other embodiments of the present disclosure, or may be executed in combination with the related art. The method may include the following steps.

At step S151, the at least one candidate signal threshold value is determined based on the terminal type and/or the terminal coverage enhancement capability.

In embodiments of the present disclosure, the network side device determines the corresponding signal threshold values for the terminal type and/or the terminal coverage enhancement function respectively, to obtain at least one at least one candidate signal threshold value.

In embodiments of the present disclosure, each candidate signal threshold value corresponds to a different terminal parameter. At least one candidate signal threshold value may be determined through a candidate signal threshold value set. Alternatively, the at least one candidate signal threshold value is determined via different signalings.

In embodiments of the present disclosure, the terminal determines the corresponding signal threshold value from the at least one candidate signal threshold value based on the type and/or the coverage enhancement function of the terminal itself, and a correspondence between each candidate signal threshold value and the terminal type and/or the terminal coverage enhancement function.

In an exemplary embodiment of the present disclosure, FIG. 7 is a schematic diagram illustrating a correspondence between a terminal parameter including a terminal type and a terminal coverage enhancement function and a candidate signal threshold value according to an exemplary embodiment. As illustrated in FIG. 7, the network side device determines the at least one candidate signal threshold value, and determines the correspondence between each candidate signal threshold value and the terminal type and/or the terminal coverage enhancement function. For example, the terminal parameter with a first-type terminal and supporting a coverage enhancement function corresponds to a candidate signal threshold value E, the terminal parameter with the first-type terminal and not supporting the coverage enhancement function corresponds to a candidate signal threshold value F , the terminal parameter with a second-type terminal and supporting a coverage enhancement function corresponds to a candidate signal threshold value M, and the terminal parameter with the second-type terminal and not supporting the coverage enhancement function corresponds to a candidate signal threshold value N.

In some embodiments of the present disclosure, values of the candidate signal threshold values in the at least one candidate signal threshold value are discrete.

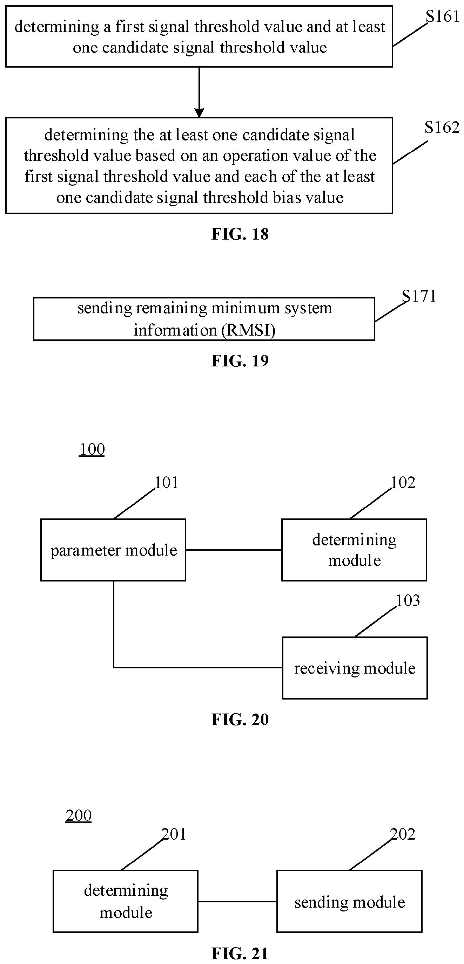

FIG. 18 is a flowchart illustrating a method for accessing a network according to an exemplary embodiment. As illustrated in FIG. 18, the method for accessing the network is performed by a network side device. The method may be executed independently, and may be executed in combination with other embodiments of the present disclosure, or may be executed in combination with the related art. The method may include the following steps.

At step S 161, a first signal threshold value and at least one candidate signal threshold bias value are determined.

At step S162, the at least one candidate signal threshold value is determined based on an operation value of the first signal threshold value and each of the at least one candidate signal threshold bias value.

In embodiments of the present disclosure, the first signal threshold value is a common signal threshold value, and the common signal threshold value is referred to as a first signal threshold value for convenience of distinguishing. The terminal determines the corresponding signal threshold bias value based on the type of the terminal itself and the coverage enhancement function of the terminal itself, and determines the corresponding signal threshold value based on the signal threshold bias value and the determined first signal threshold value.

In embodiments of the present disclosure, the operation value of the signal threshold bias value determined and the first signal threshold value is determined as the signal threshold value corresponding to the terminal type and/or the terminal coverage enhancement function to obtain the at least one candidate signal threshold value, and the at least one candidate signal threshold value is compared with a measured value of a measurement signal of the terminal.

In an exemplary embodiment of the present disclosure, the at least one candidate signal threshold bias value is determined based on the terminal type and/or the terminal coverage enhancement function.

For example, a signal threshold bias value corresponding to a first-type terminal is determined in response to the terminal parameter including the first-type terminal. A signal threshold bias value corresponding to a second-type terminal is determined in response to the terminal parameter including the second-type terminal. A signal threshold bias value corresponding to supporting the coverage enhancement function is determined in response to the terminal parameter including supporting the coverage enhancement function. A signal threshold bias value corresponding to not supporting the coverage enhancement function is determined in response to the terminal parameter including not supporting the coverage enhancement function.

Alternatively, a signal threshold bias value corresponding to the first-type terminal and supporting the coverage enhancement function is determined in response to the terminal parameter including the first-type terminal and supporting the coverage enhancement function. A signal threshold bias value corresponding to the first-type terminal and not supporting the coverage enhancement function is determined in response to the terminal parameter including the first-type terminal and not supporting the coverage enhancement function. A signal threshold bias value corresponding to the second-type terminal and supporting the coverage enhancement function is determined in response to the terminal parameter including the second-type terminal and supporting the coverage enhancement function. A signal threshold bias value corresponding to the second-type terminal and not supporting the coverage enhancement function is determined in response to the terminal parameter including the second-type terminal and not supporting the coverage enhancement function.

In embodiments of the present disclosure, the terminal may determine an operation value of the first signal threshold value and each of the at least one candidate signal threshold value, and further determine the at least one candidate signal threshold value. The terminal determines the corresponding signal threshold bias value from the at least one candidate signal threshold value based on the type and the coverage enhancement function of the terminal itself, and determines the signal threshold value corresponding to the signal threshold bias value as a final signal threshold value for comparing with the measured value of the terminal.

In some embodiments of the present disclosure, the at least one candidate signal threshold bias value is determined based on the terminal type and/or the terminal coverage enhancement function.

In embodiments of the present disclosure, the at least one candidate signal threshold bias value is determined based on the terminal type and/or the terminal coverage enhancement function, and the first signal threshold value may be determined as a signal threshold value corresponding one of the terminal parameters, and other terminal parameters different from the parameter may be configured with a different signal threshold bias value. For example, a first number of candidate signal threshold bias values are determined in response to determining the signal threshold bias value based on the terminal type or the terminal coverage enhancement function. The first number may be one. For example, a second number of candidate signal threshold bias values are determined in response to determining the signal threshold bias value based on the terminal type and the terminal coverage enhancement function. The second number may be three.

In an exemplary embodiment of the present disclosure, the first signal threshold value may be determined as a common signal threshold value, and the corresponding signal threshold bias value is determined for each terminal parameter. For example, a third number of candidate signal threshold bias values are determined in response to determining the signal threshold bias value based on the terminal type or the terminal coverage enhancement function. The third number may be two. A fourth number of candidate signal threshold bias values are determined in response to determining the signal threshold bias value based on the terminal type and the terminal coverage enhancement function. The fourth number may be four.

In some embodiments of the present disclosure, the first signal threshold value is determined based on a communication protocol or a preconfigured rule.

FIG. 19 is a flowchart illustrating a method for accessing a network according to an exemplary embodiment. As illustrated in FIG. 19, the method for accessing the network is performed by a network side device, and includes the following step.

At step S171, remaining minimum system information (RMSI) is sent.

In embodiments of the present disclosure, the RMSI is configured to carry the at least one candidate signal threshold value and/or the at least one candidate signal threshold bias value.

In embodiments of the present disclosure, the signal is a reference signal receiving power (RSRP).

Based on the same conception, an apparatus for accessing a network is further provided in embodiments of the present disclosure.

It may be understood that, the apparatus for accessing the network provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

FIG. 20 is a block diagram illustrating an apparatus for accessing a network according to an exemplary embodiment. As illustrated in FIG. 20, the apparatus 100 for accessing the network, applicable for a terminal, includes a parameter module 101 and a determining module 102.

The parameter module 101 is configured to determine a terminal parameter. The determining module is configured to determine a corresponding signal threshold value based on the terminal parameter.

In embodiments of the present disclosure, the determining module 102 is further configured to:

determine a measured value of a measurement signal of the terminal; and determine that accessing is performed based on a resource corresponding to the terminal parameter in response to the measured value being greater than or equal to the signal threshold value.

In an embodiment of the present disclosure, the terminal parameter includes at least one of:
a terminal type; or
a terminal coverage enhancement capability.

In embodiments of the present disclosure, the determining module 102 is configured to:
determine at least one candidate signal threshold value, in which each of the at least one candidate signal threshold value corresponds to a different terminal parameter; and determine the corresponding signal threshold value from the at least one candidate signal threshold value based on the terminal parameter.

In embodiments of the present disclosure, the determining module 102 is configured to:
determine the corresponding signal threshold value from the at least one candidate signal threshold value based on a correspondence between each candidate signal threshold value and a terminal type;
   and/or
determine the corresponding signal threshold value in the corresponding signal threshold value from the at least one candidate signal threshold value based on a correspondence between each candidate signal threshold value and a terminal coverage enhancement function.

In embodiments of the present disclosure, the determining module 102 is configured to:
determine a first signal threshold value and at least one candidate signal threshold bias value; and determine the corresponding signal threshold value based on the terminal parameter, the first signal threshold value and the at least one candidate signal threshold bias value.

In embodiments of the present disclosure, the determining module 102 is configured to:
determine a corresponding signal threshold bias value from the at least one candidate signal threshold bias value based on the terminal parameter; and determine an operation value of the first signal threshold value and the corresponding signal threshold bias value as the corresponding signal threshold value.

In embodiments of the present disclosure, the determining module 102 is configured to:
determine at least one candidate signal threshold value based on an operation value of the first signal threshold value and each of the at least one candidate signal threshold bias value; and determine the corresponding signal threshold value from the at least one candidate signal threshold value based on the terminal parameter.

In embodiments of the present disclosure, the at least one candidate signal threshold bias value is determined based on a terminal type and/or a terminal coverage enhancement function.

In embodiments of the present disclosure, the apparatus further includes a receiving module 103.

The receiving module 103 is configured to receive remaining minimum system information (RMSI). The RMSI is configured to carry the at least one candidate signal threshold value and/or at least one candidate signal threshold bias value.

In embodiments of the present disclosure, the signal is a reference signal receiving power (RSRP).

FIG. 21 is a block diagram illustrating an apparatus for accessing a network according to an exemplary embodiment. As illustrated in FIG. 21, the apparatus 200 for accessing the network is applicable for a network side device, and includes a determining module 201.

The determining module 201 is configured to determine at least one candidate signal threshold value. The at least one at least one candidate signal threshold value is associated with a terminal parameter.

In an embodiment of the present disclosure, the terminal parameter includes at least one of:
a terminal type; or
a terminal coverage enhancement capability.

In embodiments of the present disclosure, the determining module 201 is configured to:
determine the at least one candidate signal threshold value based on the terminal type and/or the terminal coverage enhancement capability. Each candidate signal threshold value corresponds to a different terminal parameter.

In embodiments of the present disclosure, the determining module 201 is configured to:
determine a first signal threshold value and at least one candidate signal threshold bias value; and determine the at least one candidate signal threshold value based on an operation value of the first signal threshold value and each of the at least one candidate signal threshold bias value.

In embodiments of the present disclosure, the at least one candidate signal threshold bias value is determined based on a terminal type and/or a terminal coverage enhancement function.

In embodiments of the present disclosure, the apparatus further includes a sending module 202.

The sending module 202 is configured to send remaining minimum system information (RMSI). The RMSI is configured to carry the at least one candidate signal threshold value and/or at least one candidate signal threshold bias value.

In embodiments of the present disclosure, the signal is a reference signal receiving power (RSRP).

With regard to the apparatus in the above embodiments, the specific way in which each module performs the operation has been described in detail in the embodiments of the method and will not be elaborated here.

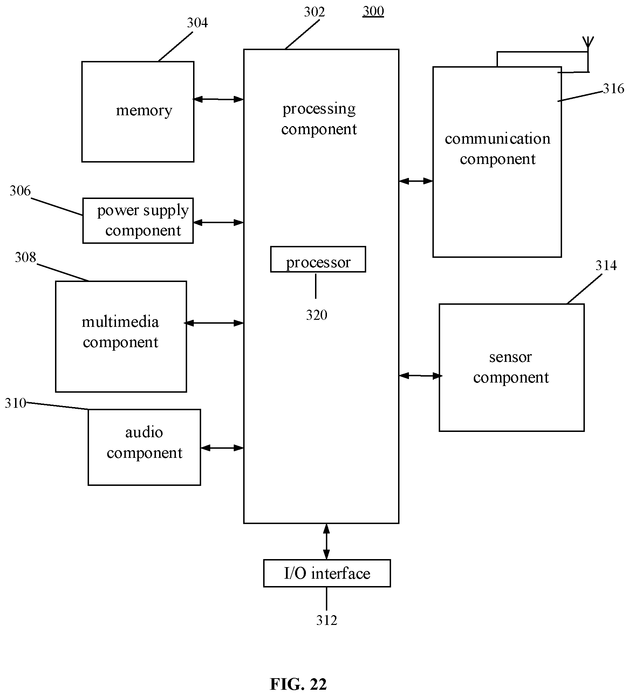

FIG. 22 is a block diagram illustrating a device 300 for accessing a network according to an exemplary embodiment. For example, the device 300 may be a mobile phone, a computer, a digital broadcasting terminal, a messaging device, a game console, a tablet device, a medical equipment, a fitness equipment, a personal digital assistant, etc.

As illustrated in FIG. 22, the device 300 may include one or more components: a processing component 302, a memory 304, a power supply component 306, a multimedia component 308, an audio component 310, an input/output (I/O) interface 312, a sensor component 314, and a communication component 316.

The processing component 302 generally controls the whole operation of the device 300, such as operations related to display, phone call, data communication, camera operation and recording operation. The processing component 302 may include one or more processors 320 to perform instructions, to complete all or part of steps of the above method. In addition, the processing component 302 may include one or more modules for the convenience of interaction between the processing component 302 and other components. For example, the processing component 302 may include a multimedia module for the convenience of interaction between the multimedia component 308 and the processing component 302.

The memory 304 is configured to store all types of data to support the operation of the device 300. Examples of the data include the instructions of any applications or methods operated on the device 300, contact data, phone book data, messages, pictures, videos, etc. The memory 304 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 306 may provide power supply for all components of the device 300. The power supply component 306 may include a power supply management system, one or more power supplies, and other units related to generating, managing and distributing power for the device 300.

The multimedia component 308 includes an output interface screen provided between the device 300 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 308 includes a front camera and/or a rear camera. When the device 300 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 310 is configured as an output and/or input signal. For example, the audio component 310 includes a microphone (MIC). When the device 300 is in operation mode, such as call mode, record mode, and speech recognition mode, the microphone is configured to receive the external audio signals. The audio signals received may be further stored in the memory 304 or sent via the communication component 316. In some embodiments, the audio component 310 further includes a speaker configured to output an audio signal.

The I/O interface 312 provides an interface for the processing component 302 and the peripheral interface module, and the peripheral interface module may be a keyboard, a click wheel, a button, etc. The buttons may include but not limited to a home button, a volume button, a start button and a lock button.

The sensor component 314 includes one or more sensors, configured to provide various aspects of status assessment for the device 300. For example, the sensor component 314 may detect the on/off state of the device 300 and the relative positioning of the component. For example, the component is a display and a keypad of the device 300. The sensor component 314 may further detect the location change of the device 300 or one component of the device 300, the presence or absence of contact between the user and the device 300, the orientation or acceleration/deceleration of the device 300, and the temperature change of the device 300. The sensor component 314 may include a proximity sensor, which is configured to detect the existence of the objects nearby without any physical contact. The sensor component 314 may further include a light sensor such as CMOS or CCD image sensor, which is configured to use in imaging applications. In some embodiments, the sensor component 314 may further include an acceleration transducer, a gyroscope sensor, a magnetic sensor, a pressure sensor or a temperature sensor.

The communication component 316 is configured for the convenience of wire or wireless communication between the device 300 and other devices. The device 300 may access wireless networks based on communication standard, such as WiFi, 2G or 3G, or their combination. In an exemplary embodiment, the communication component 316 receives broadcast signals or broadcast-related information from an external broadcast management system via a broadcast channel. In an exemplary embodiment, the communication component 316 further includes a near field communication (NFC) module to facilitate short-range communication. For example, an NFC module may be implemented based on a radio frequency identification (RFID) technology, an infrared data association (IRDA) technology, an ultra-wideband (UWB) technology, bluetooth (BT) technology and other technologies.

In an exemplary embodiment, the device 300 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non-transitory computer readable storage medium is further provided which includes instructions, such as the memory 304 including instructions. The instructions may be executed by the processor 320 of the device 300 to complete the above methods. For example, the non-transitory computer-readable storage medium may be a ROM, a random access memory (RAM), a CD-ROM, a magnetic tape, a floppy disk, an optical data storage device, etc.

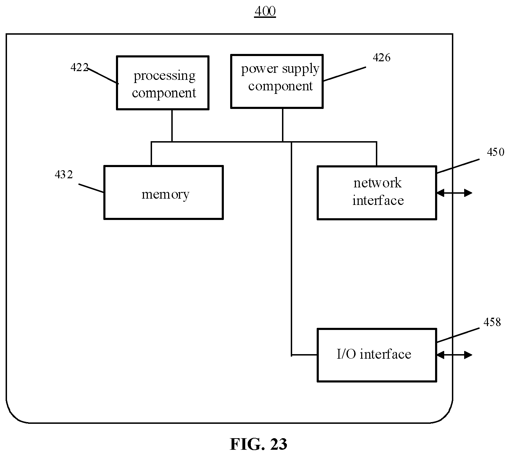

FIG. 23 is a block diagram illustrating a device 400 for accessing a network according to an exemplary embodiment. For example, the device 400 may be provided as a server. As illustrated in FIG. 23, the device 400 includes a processing component 422, which further includes one or more processors, and memory resources represented by a memory 432, which are configured to store instructions executable by the processing component 422, for example, an application. The application stored in the memory 432 may include one or more modules each of which corresponds to a set of instructions. In addition, the processing component 422 is configured to execute instructions, to perform the above method.

The device 400 may further include one power supply component 426 configured to execute power management of the device 400, and one wired or wireless network interface 450 configured to connect the device 400 to a network, and one input/output(I/O) interface 458. The device 400 may operate an operating system stored in the memory 432, for example, Windows ServerTM, Mac OS XTM, UnixTM, LinuxTM, FreeBSDTM.

It may be further understood that, "a plurality of" in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "/" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for accessing a network, performed by a terminal, comprising:
determining a terminal parameter; and
determining a corresponding signal threshold value based on the terminal parameter.

2. The method according to claim 1, further comprising:
determining a measured value of a measurement signal of the terminal; and
determining that accessing is performed based on a resource corresponding to the terminal parameter in response to the measured value being greater than or equal to the signal threshold value.

3. The method according to claim 1, wherein the terminal parameter comprises at least one of:
a terminal type; or
a terminal coverage enhancement capability.

4. The method according to claim 1 or 3, wherein determining the corresponding signal threshold value based on the terminal parameter comprises:
determining at least one candidate signal threshold value, wherein each of the at least one candidate signal threshold value corresponds to a different terminal parameter; and
determining the corresponding signal threshold value from the at least one candidate signal threshold value based on the terminal parameter.

5. The method according to claim 4, wherein determining the corresponding signal threshold value from the at least one candidate signal threshold value based on the terminal parameter comprises:
determining the corresponding signal threshold value from the at least one candidate signal threshold value based on a correspondence between each candidate signal threshold value and a terminal type;
and/or
determining the corresponding signal threshold value from the at least one candidate signal threshold value based on a correspondence between each candidate signal threshold value and a terminal coverage enhancement function.

6. The method according to claim 1 or 3, wherein determining the corresponding signal threshold value based on the terminal parameter comprises:
determining a first signal threshold value and at least one candidate signal threshold bias value; and
determining the corresponding signal threshold value based on the terminal parameter, the first signal threshold value and the at least one candidate signal threshold bias value.

7. The method according to claim 6, wherein determining the corresponding signal threshold value based on the terminal parameter, the first signal threshold value and the at least one candidate signal threshold bias value comprises:
determining a corresponding signal threshold bias value from the at least one candidate signal threshold bias value based on the terminal parameter; and
determining an operation value of the first signal threshold value and the corresponding signal threshold bias value as the corresponding signal threshold value.

8. The method according to claim 6, wherein determining the corresponding signal threshold value based on the terminal parameter, the first signal threshold value and the at least one candidate signal threshold bias value comprises:
determining at least one candidate signal threshold value based on an operation value of the first signal threshold value and each of the at least one candidate signal threshold bias value; and
determining the corresponding signal threshold value from the at least one candidate signal threshold value based on the terminal parameter.

9. The method according to claim 6, wherein the at least one candidate signal threshold bias value is determined based on a terminal type and/or a terminal coverage enhancement function.

10. The method according to claim 1, further comprising:
receiving remaining minimum system information (RMSI), wherein the RMSI is configured to carry at least one candidate signal threshold value and/or at least one candidate signal threshold bias value.

11. The method according to claim 1, wherein the signal is a reference signal receiving power (RSRP).

12. A method for accessing a network, performed by a network side device, comprising:
determining at least one candidate signal threshold value, wherein the at least one at least one candidate signal threshold value is associated with a terminal parameter.

13. The method according to claim 12, wherein the terminal parameter comprises at least one of:
a terminal type; or
a terminal coverage enhancement capability.

14. The method according to claim 12 or 13, wherein determining the at least one candidate signal threshold value comprises:
determining the at least one candidate signal threshold value based on the terminal type and/or the terminal coverage enhancement capability, wherein each candidate signal threshold value corresponds to a different terminal parameter.

15. The method according to claim 12 or 13, wherein determining the at least one candidate signal threshold value comprises:
determining a first signal threshold value and at least one candidate signal threshold bias value; and
determining the at least one candidate signal threshold value based on an operation value of the first signal threshold value and each of the at least one candidate signal threshold bias value.

16. The method according to claim 15, wherein, the at least one candidate signal threshold bias value is determined based on a terminal type and/or a terminal coverage enhancement function.

17. The method according to claim 12, further comprising:
sending remaining minimum system information (RMSI), wherein the RMSI is configured to carry the at least one candidate signal threshold value and/or at least one candidate signal threshold bias value.

18. The method according to claim 12, wherein the signal is a reference signal receiving power (RSRP).

19. An apparatus for accessing a network, applicable for a terminal, comprising:
a parameter module, configured to determine a terminal parameter; and
a determining module, configured to determine a corresponding signal threshold value based on the terminal parameter.

20. An apparatus for accessing a network, applicable for a network side device, comprising:
a determining module, configured to determine at least one candidate signal threshold value, wherein the at least one at least one candidate signal threshold value is associated with a terminal parameter.

21. A device for accessing a network, comprising:
a processor; and
a memory for storing instructions executable by the processor;
wherein the processor is configured to perform the method of any one of claims 1 to 11 or perform the method of any one of claims 12 to 18.

22. A non-transitory computer-readable storage medium, wherein when instructions in the storage medium are executed by a processor of a mobile terminal, the mobile terminal is caused to perform the method of any one of claims 1 to 11, or the mobile terminal is caused to perform the method of any one of claims 12 to 18.
